# EUROPEAN PATENT APPLICATION

(11) **EP 2 579 561 A1**
(43) Date of publication of application: **10.04.2013**
(21) Application number: 12187447.3
(22) Date of filing: 05.10.2012
(51) Int. Cl.: H04M 3/22, H04M 7/12, H04M 7/00, H04L 12/28, H04N 21/61, H04N 21/647

(54) **Smart gateway**

(30) Priority: 07.10.2011 US 201113268239
(71) Applicant: Comcast Cable Communications, LLC, Philadelphia, PA 19103 (US)
(72) Inventor: Urban, David, Philadelphia, PA Pennsylvania 19103 (US); Albano, Christopher, Philadelphia, PA Pennsylvania 19103 (US)
(74) Representative: Jansen, Cornelis Marinus

(57) **Abstract**

A smart gateway is disclosed for use in a local network for detecting a network configuration, for detecting devices connected to the network, and for providing configurable signal conditioning to correct problems in the network. The smart gateway includes an analysis circuit for testing the electrical properties of different network branches, and includes configurable signal conditioning circuitry for optimizing the performance of the network.

## Description

### BACKGROUND

Local networks connect devices such as televisions, digital set top boxes, modems, MoCA transceivers, mobile devices, computers, and other devices for device-to-device communication and for communication to and from external networks.

Different devices may be added to or removed from the local network, and such devices may have different signal requirements, which may not be compatible with one another. This may occur, for example, where older technology, such as analog technology, is mixed with new technology, such as digital, IP, and/or MOCA signaling technologies. Problems may arise, for example, where incompatible devices share the network, and where the network communication properties have changed over time.

### SUMMARY

This Summary is provided to introduce a selection of concepts in a simplified form that are further described below in the Detailed Description. This Summary is not intended to identify key features or essential features of the disclosure.

A smart gateway is disclosed for use in a local network for detecting a local network configuration, for determining user equipment connected to the local network, and for providing configurable signal conditioning to correct problems in the local network.

In one embodiment, the smart gateway operates as a hub for a local network and includes an upstream port for connecting the local network to an external network and multiple downstream ports for connecting multiple branches of the local network. The smart gateway may include configurable circuitry for adding amplifiers and filters in-line with each downstream port. The smart gateway may further include a pulse generator / analyzer for testing the electrical properties of each network branch connected to each downstream port and for testing consumer premises equipment coupled to each network branch.

Based on the testing, devices connected to the local network may be detected by comparing frequency responses measured during the testing to signatures of known devices.

In one instance, the smart gateway may control configurable conditioning circuitry to optimize the performance of the local network based on the results of testing. Other embodiments are discussed below.

### BRIEF DESCRIPTION OF THE DRAWINGS

FIG 1 illustrates a distribution network in accordance with one or more embodiments of the disclosure.
FIG. 2 illustrates a network in a premise in accordance with one or more embodiments of the disclosure.
FIG. 3 illustrates a network in a premise in accordance with one or more embodiments of the disclosure.
FIGS. 4-6 illustrate various architectures and methods for gateways in accordance with one or more embodiments of the disclosure.
FIGS. 7A and 7B illustrate operational implementations of a gateway in accordance with one or more embodiments of the disclosure.
FIG. 8 illustrates a schematic representation of a user device in accordance with one or more embodiments of the disclosure.
FIG. 9 illustrates an example flowchart of a method in accordance with one or more embodiments of the disclosure.
FIG. 10 illustrates a schematic block diagram of a computing platform in accordance with one or more embodiments of the disclosure.

### DETAILED DESCRIPTION

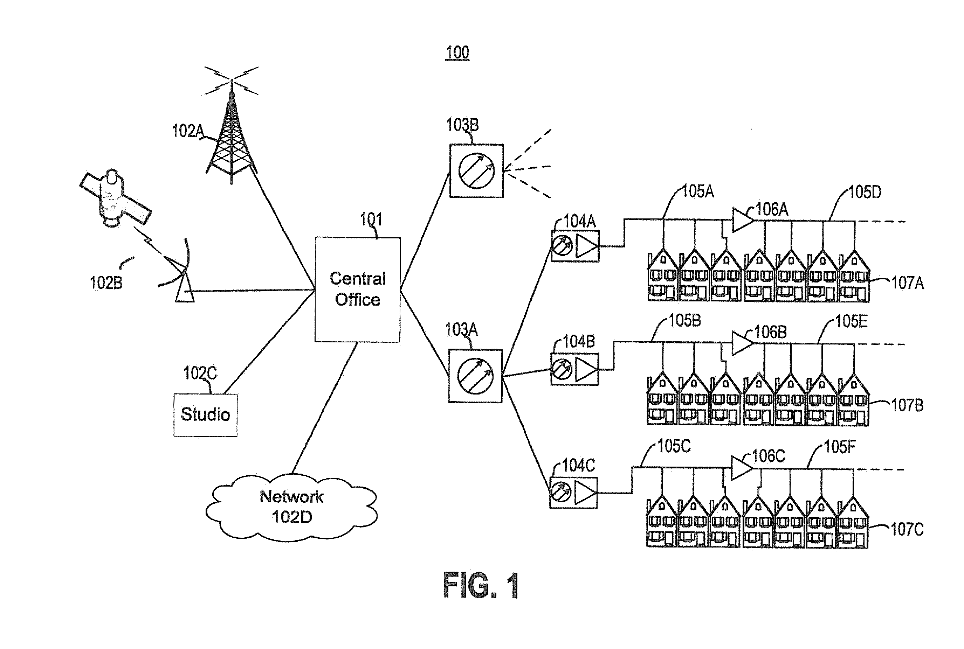

FIG. 1 illustrates a data network 100, for delivering data such as content (e.g., audio-visual programming) to user equipment. Such networks may incorporate coaxial cable, fiber-optic cable, wireless communication links, other types of communication medium, and any combination thereof. Network 100 may allow two-way communication in the network to expand the network's capability. Such networks may provide additional services, including data networking and network (e.g., Internet) connectivity, video-on-demand (VOD), and voice-over-Internet Protocol (VOIP). A central office 101 may operate to receive and process content, and distribute the content through the network to user devices. The content may be received through a microwave antenna or local RF antenna 102a, through a satellite link 102b, through a direct-wired connection such as a fiber link 102c, or through other sources or means. The central office may, for example, modulate the content onto optical, RF, or other types of signals in various analog and/or digital formats (e.g., NTSC, ATSC, DVB-T, etc.), and transmit the modulated signals over the network to the users. The central office 101 may be a single facility, or may be across multiple facilities, which may include a number of computer servers interconnected through other networks, that operate together to perform functions such as receiving and distribution of content.

In one example, the network may include a number of fiber-optic cables that run from the central office facility 101 to optical distribution points 103A and 103B. While two optical distribution points are shown, network 100 may include any number of optical distribution points as required by the areas and distances served. The fiber-optic cables carry signals in digital form as pulses of light reflected down the glass fiber-optic cable. The pulses of light may be received and repeated by the optical distribution points onto a number of additional fiber-optic cables to optical nodes 104A, 104B, 104C, and other optical nodes, which have not been illustrated for convenience.

The optical nodes convert the pulses of light carried on the fiber optic cable into another type of signaling, such as RF signals, which may be amplified and transmitted through another portion of the network to serve users. The network may serve clusters of users such as neighborhoods, which are illustrated as 107A-C. In various examples, neighborhoods may consist of one or more premises (e.g., 2000 homes).

In various examples, within each neighborhood, a network may include a number of trunk and feeder lines 105A-F interconnected with amplifiers 106A-C, to individual drop lines to each premises. The amplifiers 106A-C, optical nodes 104A-C, and optical distribution points 103A-B each have the capability to transmit and receive signals in both directions, which enables the network to transmit signals, which originate from users, back to the central office 101. The two-way communication allows the network 100 to provide interactive content, such as audio-visual services and data services.

Various examples of network 100 may include hybrid fiber-coaxial cable networks, other coaxial-cable only networks, fiber-optic only networks, satellite networks, wireless networks, RF and microwave networks, POTS networks, DSL networks, power line networks, and/or combinations thereof to communicate information between central office 101 and premises/users.

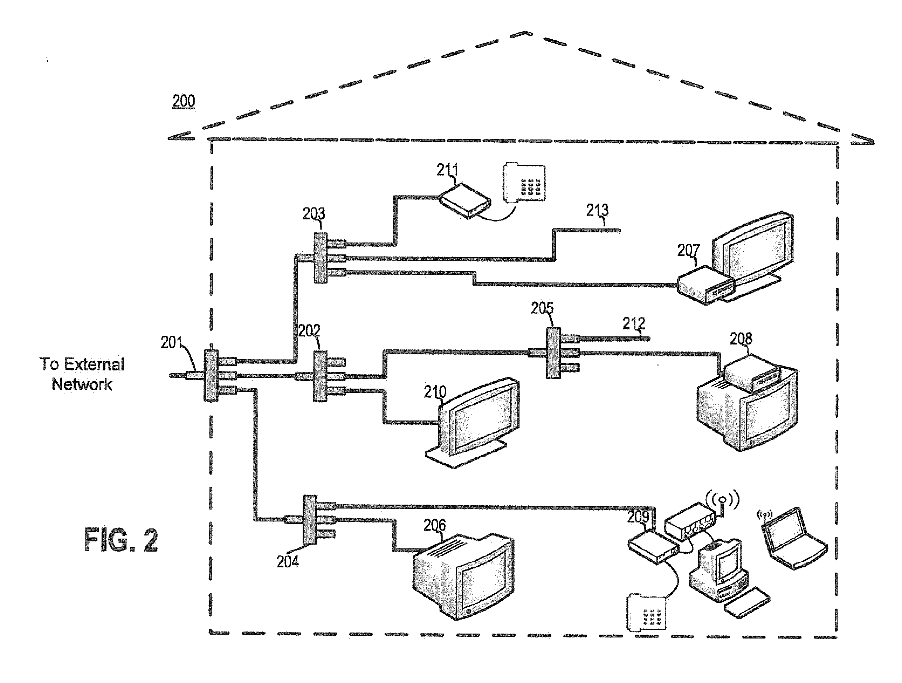

FIG. 2 illustrates a local network (e.g., a home network, a network covering a premises, etc.) such as local network 200, which may connect one or more user devices 206-211 to network 100 through one or more couplers, amplifiers, filters, and splitters 201-205. The user devices, which may include consumer premise equipment (CPE) and/or terminal equipment, may process the signals to provide a variety of multi-media and data services to users. In some networks, user equipment may include only analog devices, such as analog televisions and set-top boxes 206, which could receive and display, for example, analog broadcasted television programs to the user. In other examples, instead of or in addition to the analog devices, features may be incorporated for newer devices such as digital televisions 210, digital terminal adaptors (DTAs) / set-top boxes 207, digital video recorders (DVR) 208, modems / embedded multimedia terminals (eMTA) 209, and voice over IP (VOIP) terminals 211. Further examples may additionally include mobile devices such as smart phones, wireless adapters (e.g., Wi-Fi gateways), computers, etc.

Various examples of local network 200 may include a coaxial cable network, fiber-optic networks, POTS networks, DSL networks, power line networks, any other wired and/or wireless networks, and/or combinations thereof, which may carry signals.

Various embodiments of network 200 may be included in various premises, including single-family and/or multi-family residential structures such as homes, apartments and condominiums; commercial buildings such as offices, office parks, restaurants, retail stores and malls; and industrial facilities such as factories, assembly plants, etc. In some examples, local network 200 may be spread across multiple premises such as a college campus or research park, which include a combination of residential, commercial, and/or industrial premises.

Networks 100 and 200, in various examples, may utilize various different types of physical communication media, such as twisted pair conductors, coaxial cable, fiber-optic cable, power line wiring, wireless transmission, and combinations thereof.

In various examples, external network 100 and local network 200 may support a variety of communication standards and requirements over the same physical media. For example, networks 100 and 200 may support National Television System Committee (NTSC), Advanced Television Systems Committee (ATSC), Digital Video Broadcasting - Terrestrial (DVB-T), Integrated Services Digital Broadcasting (ISDB), Digital Terrestrial Multimedia Broadcast (DTMB), Digital Multimedia Broadcasting (DMB), Data Over Cable Service Interface Specification (DOCSIS®), PacketCable, Motion Picture Experts Group (MPEG-1, MPEG-2, MPEG-4, etc.), and Multimedia Over Coax Alliance (MoCA) standards. In some of these examples, problems may arise where networks 100 and 200 support incompatible standards and devices.

For example, a network 200 in a premises such as a home may be upgraded to support new technologies by a network operator, by a third party such as a construction contractor, by the premise owner (e.g., by operating a new device), and/or by another party. As devices are added to or subtracted from network 200, and/or as the configuration of the transmission media and interconnecting devices of network 200 are changed, the upgrading may be performed in a way that interferes with and/or degrades the performance of the user devices connected to the network. For example, a communication line may be left unterminated (e.g., cables 212 and 213 in FIG. 2), signals may be divided down through too many signal splitters, and incompatible filters for old technology may be left in the network.

In another example, network 200 may include a mix of different devices, having incompatible signal requirements, connected together. This may occur, for example, where older technology, such as analog signaling, is mixed on network 200 with newer technology, such as digital signaling and/or MoCA signaling. In other various examples, problems may arise from multiple causes, such as where incompatible devices share the network, where the network wiring has been changed, and/or where the network is mis-configured upon initial installation.

Technicians are often called upon to troubleshoot problems in the network. In some situations network 100 and/or network 200 is controlled and maintained by the network operator, and thus a great deal of information may be available to the technician about the conditions of the networks and devices connected to the networks. In other situations, the technician knows very little about the network and/or device configuration. Such situations may include, for example, where a person seeks to add an incompatible device, or where a person seeks to add an unauthorized device (e.g., a set top box) or otherwise tempers with lines for receiving an unauthorized signal or service provided on the networks (e.g., television service).

When a problem arises, a technician without having knowledge of the network and device configuration, may be required to visit one or more locations along networks 100 and 200 to measure and diagnose communication and equipment problems. Such diagnosis may require intrusive visits inside a user's premise to physically identify and locate a network segment or device causing the problem. In some situations, locating a problem may entail damaging or disturbing the premises in order to locate network segments and devices in otherwise inaccessible places, such as behind walls and in crawl spaces. Such troubleshooting may be inefficient and costly to the network owner, premises owner and/or other person or corporate entity that bears the expense of employing the technician and repairing the damage.

In view of the shortcomings identified in the disclosure, various aspects are presented therein for troubleshooting, managing, and analyzing networks to correct problems caused by incompatible standards and devices.

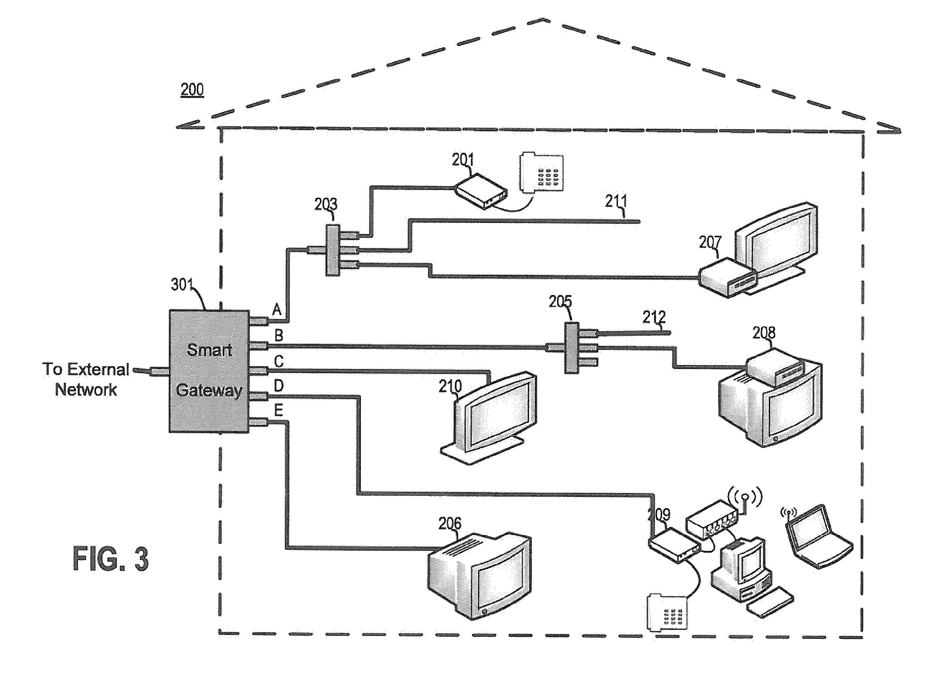

FIG. 3 illustrates one example of a smart gateway 301 adjacent or integrated into local network 200. Gateway 301, in one aspect, is a distribution point between the drop from network 100 into the local network 200. In other examples, local network 200 may include one or more gateways 301 integrated into one or more distribution points within the local network 200. In various examples, gateway 301 may operate to test communication characteristics, such as RF characteristics, on one or more down-stream communication branches and/or user equipment connected to or served by the gateway. The gateway 301 may communicate the tested characteristics upstream through networks 100 and/or 200 to a server or other computing device within or outside network 100 and/or 200. In certain variations, gateway 301 may also receive commands through networks 100 and 200 to control the testing and to configure circuits or other components within the gateway for conditioning down-stream connections.

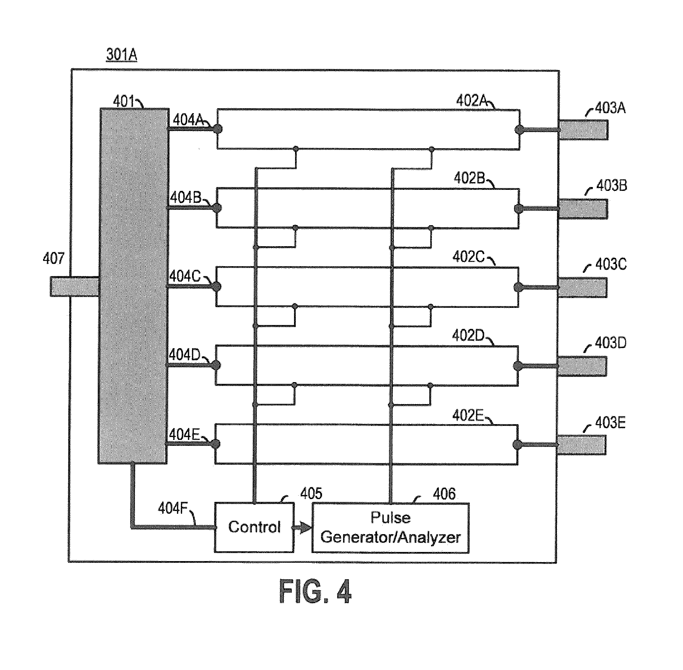

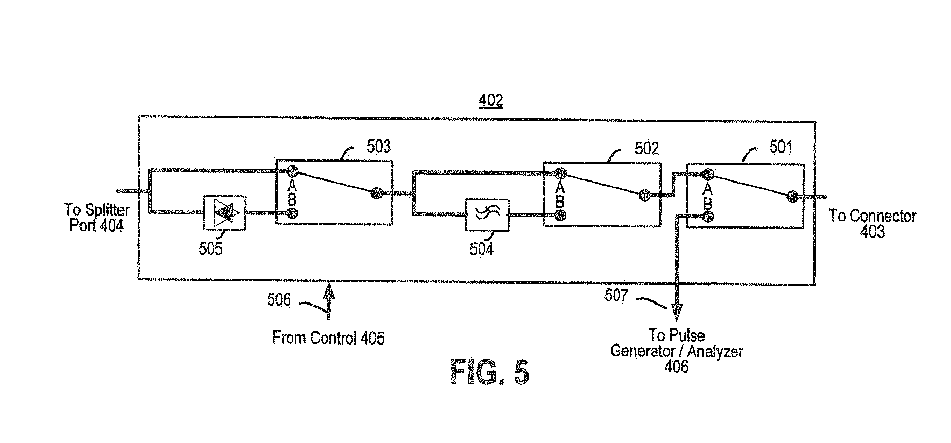

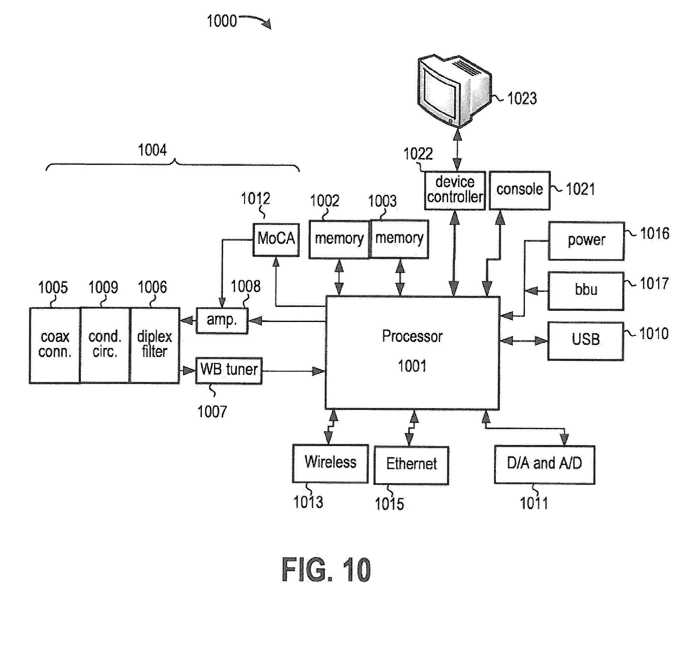

FIG. 4 illustrates one example embodiment 301A of the smart gateway. Gateway 301A may include a coupler/splitter 401, such as an RF hybrid splitter, optical splitter, or other device, which may couple transmission power between an upstream connection port 407 and two or more internal connection ports. As illustrated, in one example, coupler 401 includes six internal connection ports 404A-F. Connections 404A-E, in this example, are connected to five configuration circuits 402A-E, respectively, an example of which is presented in more detail in FIG. 5. The gateway may include a control device connected to connection 404F or other port. The control device 405 may include a transceiver for communicating with an upstream device (e.g., a server) in a network (e.g., networks 100, 200, etc.) through connection 407. Control device 405 may also include communication logic for interpreting and generating the upstream communications, and control and telemetry interfaces to configure and read data from circuits 402A-E and a pulse generator/analyzer 406. The communication and control/telemetry logic may include various combinations of hardwired and programmable logic circuits, microprocessors, and memory storing instructions that are interpretable by the microprocessors and circuits for running the functions of the control device 405. An example embodiment of control device 405 logic is more fully described with respect to FIG. 10 below.

The gateway 301A may use the configuration circuits 402A-E to connect downstream connection ports 403A-E to coupler/splitter connections 404A-E, respectively, and/or to the pulse generator / analyzer 406. The smart gateway may utilize the pulse generator / analyzer to measure the network branch characteristics of each portion of the local network coupled to each downstream port 403A-E. Based on the measured characteristics, control device 405 may command configuration circuits 402A-E to add filters in line with the downstream ports 403A-E that need protection from certain signals, to remove filters for devices that need to use a particular frequency band, to add amplification for high attenuation paths, and/or remove amplification for over-amplified paths/signals.

FIG. 5 illustrates one example embodiment of the configuration circuit 402, which may be used in gateway 301A for one or more of circuits 402A-E in FIG. 4. Configuration circuit 402 may include switches 501, 502, and 503, which may be controlled via control input 506 from control device 405 of FIG. 4, or from another control device or interface. When switches 501, 502, and 503 are commanded by control device 405 to position "A," the internal splitter port 404 in FIG. 4 may be electrically coupled to the downstream connector port 403 in FIG. 4.

Switch 501, when commanded to position "B," may disconnect the downstream connector port 403 from the internal port 404, and instead connect the downstream connector port 403 to the pulse generator / analyzer 406. In this configuration, gateway 301 may test and characterize the portion of the network connected to downstream port 403 as further described below.

In some examples, switches 502 and 503 may be configured to provide signal conditioning, based on the signal requirements of the network signal path connected to downstream port 403. Switch 502, for example, when commanded to position "B," switches one or more filters 504 in-line between internal splitter port 404 and downstream port 403. Filters 504 may be fixed and designed for filtering specific frequency ranges, or may be tunable, manually or automatically by control device 405.

In other examples, filters 504 may be used in order to permit incompatible devices operate on the same network. For example, eMTAs may operate at 54-1002 MHz downstream frequencies and 5-42 MHz upstream frequencies. At the same time, a MoCA enabled set-top box may, for example, support MoCA signals in a frequency range 875 to 1500 MHz. In one example configuration, the high frequency MoCA signals may be received at an eMTA connected to a different branch of the network, and cause the eMTA to suffer interference. To correct this situation, in various examples, a filter blocking frequency bands of the MoCA signaling may be inserted into the eMTA branch with switch 502 to prevent the MoCA signals from reaching the eMTA.

In another example, filter 504 may be a mid-split-frequency filter for television signals. In various geographical regions, the allocation of upstream versus downstream spectrum may be standardized. For example, upstream and downstream spectrum allocation for signals transmitted between user devices and the central office 101 may be at one point in time 5-42 MHz and 54-1002 MHz, respectively, as is the situation in the United States and Canada. In such an example, analog TV channels (e.g., 2, 3, 4, 5, 6,) may occupy the downstream spectrum band 54-88 MHz. If however, a network operator decides to eliminate certain analog television transmission channels, an option may be to change the frequency split between upstream and downstream spectrum allocation to provide more upstream capacity, e.g., in the frequency bands of the eliminated analog TV signals (e.g., channels 2, 3, 4, 5, 6).

A data standard, such as data standards found in CableLabs DOCSIS 3.0 for example, may specify 5-85 MHz for upstream transmission and 108-1002 MHz for downstream transmission as a mid-split option. Interference may arise when new devices transmit according to the data standard in the 54-85 MHz band at high powers, e.g., +54 dBmV, in the presence of television signal receiving devices specifically designed to operate in the previous mid-frequency split to receive the previous analog signals in these same frequency bands at levels as low as -15 dBmV. In one example of such a scenario, a television signal-receiving device may no longer provide or display interference free audio and video while a device such as a modem is transmitting in the 42-85 MHz band at very high power while both devices are connected to the same splitter network. In various embodiments, a filter may be inserted to protect the television signal-receiving device from high-powered data transmissions of devices operating with a 5-85 MHz mid-split.

In an example according to the above scenario, referring to FIGS. 4 and 5, a modem with a 5-85 MHz upstream transmit band may be connected to port 403A and circuit 402A may include its switch 502 toggled to position A so that the 5-85 MHz upstream signals may be transported through the gateway to port 404 without filtering A television signal receiving device designed for downstream reception from 54-870 MHz may be connected to port 403B. Circuit 402B may include its switch 502 set to position B to insert its filter 504, which may have high attenuation in the 42-85 MHz band in order to protect the television signal receiver from harmful interference due to modem transmission in the 42-85 MHz band.

In various examples, one or more amplifiers 505 may be switched in-line between internal splitter port 404 and downstream port 403 when switch 503 is commanded to position "B." The amplifiers, for example, may be selected by control device 405 to include upstream amplifiers, such as, for example, those meeting the requirements of DOCSIS communication standards, and/or downstream amplifiers for amplifying low-level signals. In other examples, other amplifiers may be included depending on the technology requirements of the networks and user devices (e.g., CPEs). In certain variations, amplifiers may have fixed gains, and/or may have programmable gains set manually (e.g., by manually actuated switches, jumpers, variable passive devices, etc.) or set automatically by control device 405 or another device.

While switches 501, 502, and 503 in the example of FIG. 5 are illustrated as single-pole-double-throw switches arranged in series, other embodiments may include different switch types (e.g., manual, solid state, electronic, etc.) in different arrangements. For example, switches 502 and 503 in various embodiments may include more than two poles and be arranged to select a number of different filter and amplifier combinations. As a further example, switch 501 may be combined with switch 502 or 503 to form a triple pole switch. Various other embodiments of circuit 402 are contemplated, which are configurable to connect port 403 to the generator / analyzer 406 and to condition the signal path. In some examples, circuit 402 may further be designed as multiple separate circuits.

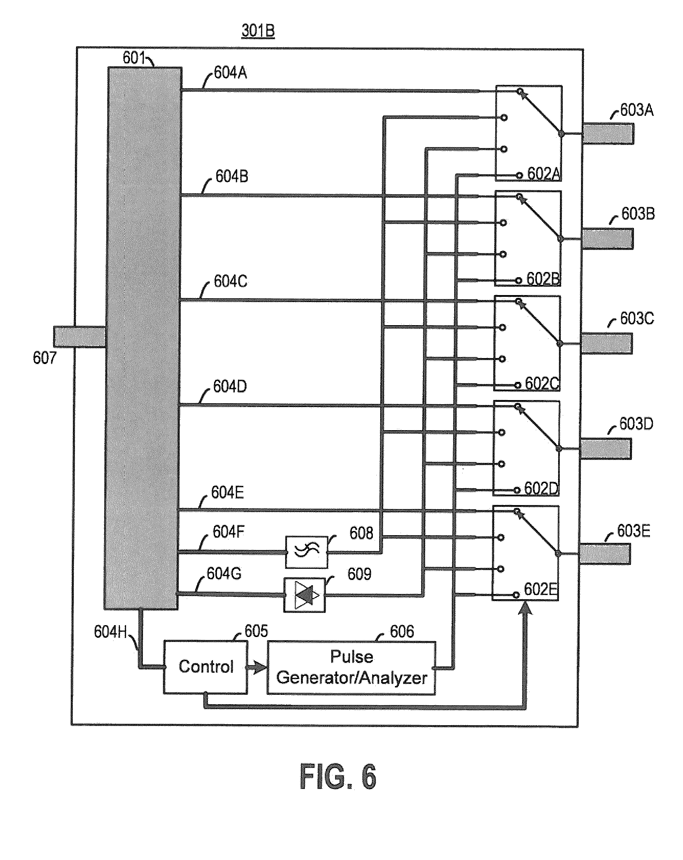

FIG. 6 illustrates an alternate example embodiment 301B of the smart gateway, which minimizes hardware by sharing a set of filters and amplifiers amongst multiple downstream ports 603A-E. Gateway 301B includes a coupler/splitter 601, such as for example, an RF hybrid splitter, optical splitter, or other device which couples transmission power between an upstream connection 607 and two or more internal ports. As illustrated in this example, coupler 601 may include eight internal ports 604A-H.

In the example of FIG. 6 five single-pole-quadruple throw switches (e.g., RF switches) 602A-E may be connected to ports 604A-E, respectively. Switches 602A-E may connect downstream ports 603A-E to one of: 1) internal ports 604A-E of coupler/splitter 601, 2) filters 608, 3) amplifiers 609, or 4) pulse generator / analyzer 606.

The example gateway of FIG. 6 may include a control device 605 connected to internal splitter port 604H or other port. Control device 605 may include a transceiver for communicating with an upstream device (e.g., a server) in a network (e.g., networks 100, 200, etc.) through port 607. Control device 605 may also include logic for interpreting and generating the upstream communications, and control and telemetry interfaces to configure and read data from switches 602A-E and pulse generator/analyzer 606. The communication and control/telemetry logic may include various combinations of hardwired and programmable logic circuits, microprocessors, and memory storing instructions that are interpretable by the microprocessors and circuits for running the functions of the control device 605. An example embodiment of control device 605 logic is further described with respect to FIG. 10 below.

The filters 608 and amplifiers 609 may be connected upstream to internal splitter ports 604F and 604G respectively.

The gateway 301B may operate in a similar manner as gateway 301A of FIG. 4. It may use the switches 602A-E to connect each downstream connection port 603A-E to the internal splitter ports 604A-E, or to the pulse generator / analyzer 606, which may function in the same manner as pulse generator / analyzer 406 described above. In various embodiments, gateway 301B may differ from gateway 301A in that instead of having selectable filters and amplifiers for each downstream port 603A-E, one set of filters 608 and one set of amplifiers 609 are shared between the downstream ports 603A-E. Control device 605 may control switches 602A-E to connect filters 608 in-line with one of the downstream ports 603A-E. Likewise, control device 605 may control switches 602A-E to connect amplifiers 609 in-line with a different one of the downstream ports. Filters 608 and amplifiers 609 are representative of only a few embodiments of conditioning circuits. Switches 602A-E may include additional poles, or additional switches may be provided to switch additional conditioning circuits in-line with one or more of the downstream ports 603A-E. For example, as some variations, filters 608 and amplifiers 609 may each be replaced with portions of configuration circuit 402 of FIG. 5 to switch amplifiers 505 and filters 504 in series with one or more of the downstream ports 603A-E.

Using the smart gateway embodiments illustrated in FIGS. 4 and 6, or various combinations thereof, local networks such as the one illustrated in FIG. 3 may be debugged and configured to optimally support the variety of user devices (e.g., CPEs) connected within the local network.

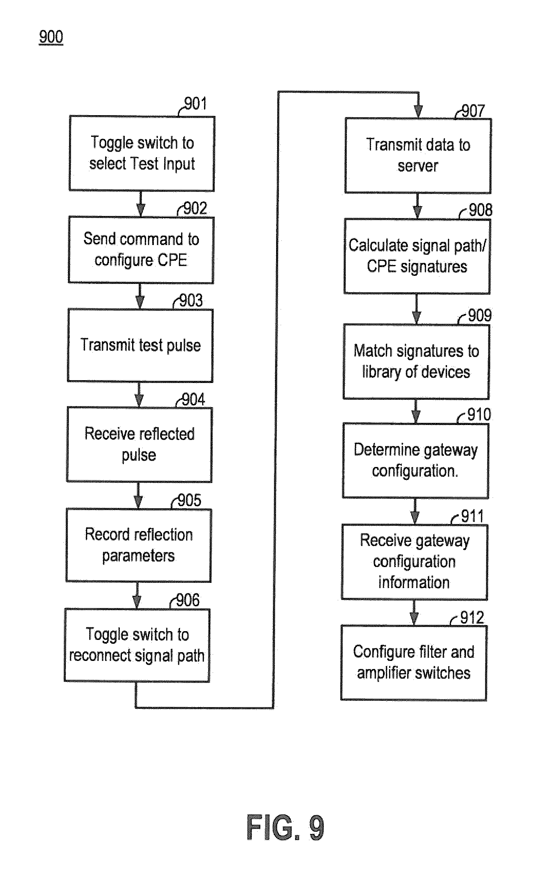

FIG. 9 illustrates one embodiment for debugging and configuring the local network using the smart gateway. In the process, the pulse generator / analyzer 406 and 606 may transmit a pulse or other test signal through one of the downstream local network branches and capture the branch's frequency response to the test pulse.

The example of FIG. 9 starts at block 901, where the smart gateway may be configured to select one downstream port for testing. For example, in block 901, switch 501 of FIG. 5 may be toggled to position "B," or switch 602A of FIG. 6 may be toggled to the bottom position, to connect one of the downstream ports (e.g., 403A, 603A) of the smart gateway to pulse generator / analyzer 406/606. The connected port may be for example port A of smart gateway 301 in FIG. 3.

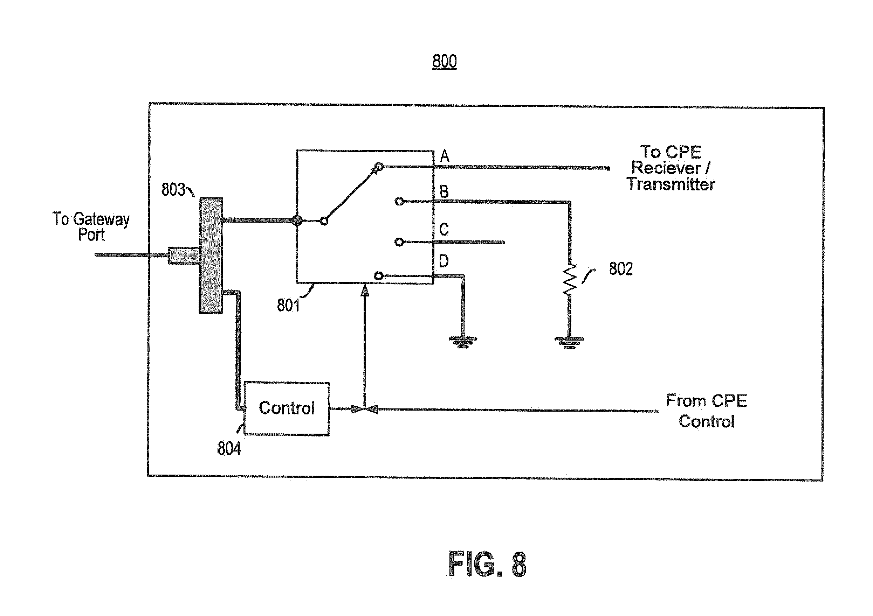

In some examples, a user device connected to the tested branch may include a termination circuit for testing. An illustrative termination circuit 800 is depicted in FIG. 8. If a user device has a termination circuit, or is otherwise configurable for testing, the smart gateway can send instructions in block 902 to one or more user devices coupled to the branch to be tested to configure those user devices for testing. The instructions may be sent from the control device 405/605 via the pulse generator /analyzer 406/606 if the downstream branch of the local network is already switched to the pulse generator / analyzer 406/606. In another example, control device 405/605 may send device-to-device messages over the local network to the user device prior to switching the downstream branch for testing (e.g., MoCA messages). In other examples, the instructions may be sent from a server or other device coupled to the local network, or from a server or device outside the local network over network 100 or other network (e.g., wireless network).

In some examples, termination circuit 800 may include a switch 801 that may couple the network branch to the user device receiver /transmitter interface (e.g., position A), to a terminator 802 matching the cable impedance (e.g., 75Q at position B), to an open circuit (e.g., position C), or to a short circuit (e.g., position D). In one embodiment, switch 801 may be controlled by the user device, and the user device by default may control the switch to position A so that the user device may receive commands and other data over the network. In such an example, the user device may be configured to interpret commands (e.g., MoCA signaling) received over the network to control switch 801 to positions B, C, or D for momentary durations of time sufficient to run a test of the interface. Alternatively or additionally in other examples, termination circuit 800 may include a separate control block 804 connected to the network through coupler 803, for receiving commands and controlling switch 801. In various examples, termination circuit 800 may be part of the user device, or may be an external device connected in-line with the network at the user device network interface.

Commanding the user device into different termination configurations may be advantageous in different test scenarios. For example, a user device may be instructed by the smart gateway to provide a broadband 75 Ω termination so that very little reflection comes from the cable feeding that device. In one example, the gateway may feed four user devices with three of the user devices set to provide a broadband 75 Ω termination and the fourth user device set to connect the fourth device's receiver/transmitter interface. In this example, the fourth user device and path feeding the fourth user device can be measured with small disruption from the paths to the other three user devices. In another example, with three user devices terminated with 75 Ω and the fourth device set to terminate with a short circuit or open circuit, a broadband strong reflection from the fourth device may allow for an isolated measurement of the path feeding the fourth device.

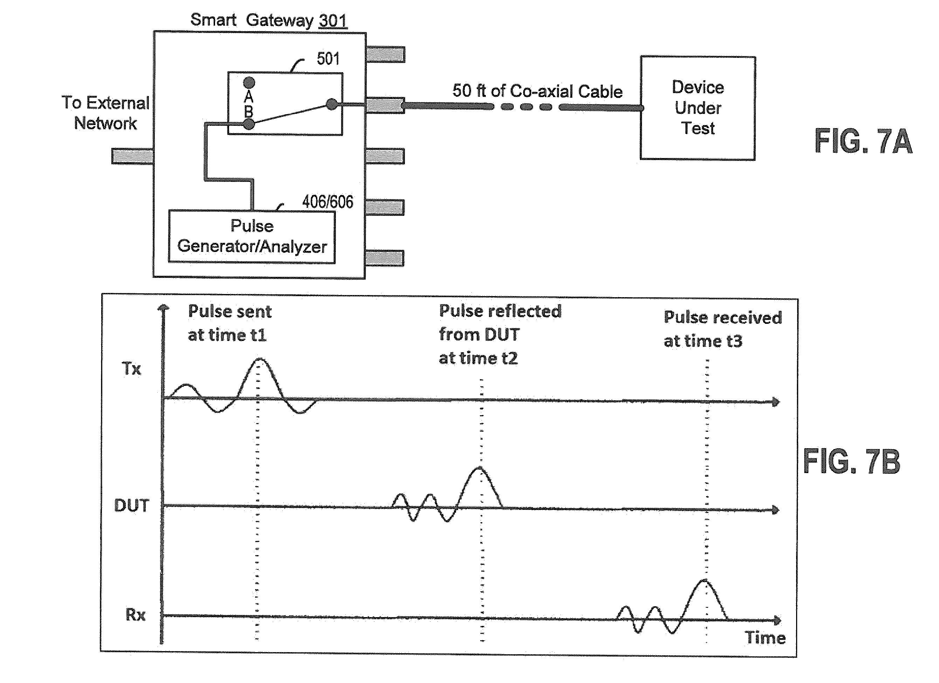

Returning to FIG. 9, after user devices are commanded in block 902 into a test configuration (if commandable), steps 903, 904, and 905 are performed. These steps are described for illustration purposes with respect to FIGS. 7A and 7B. FIG. 7A illustrates an example diagram of testing a downstream network branch with a single user device, illustrated as the Device Under Test. FIG. 7B illustrates example signals on the tested network branch.

In step 903, pulse generator / analyzer, in one example may transmit a signal pulse unto the downstream path being tested. This pulse is illustrated as the pulse at time t1 on the Tx line in FIG. 7B. The signal will propagate down the tested path until it reaches one or more user devices, or termination points at different lengths of the path. At each termination point, depending on the impedance of the user device or termination point, signal energy may either be absorbed or reflected back to the path.

FIG. 7A illustrates a simplified view with only one user device (i.e., Device Under Test (DUT)), connected at the end of a single path. When the pulse reaches the DUT, depending on the broadband impedance of the DUT receiver / transmitter interface, a portion of the pulse energy may be reflected back down the path as a reflected pulse. The reflected pulse, may be, for example, as illustrated at time t2 on the DUT line of FIG. 7B.

At step 904 of FIG. 9, the generator / analyzer 406/606 in FIG. 7A may be configured (e.g., via a switch) to receive the reflected pulse. An example received pulse is illustrated as the pulse at time t3 on the Rx line of FIG. 7B. In step 905, the received pulse may be recorded by the pulse generator /analyzer 406/606 and/or control device 405/605. In some examples, step 905 may include digitizing the reflected pulse using a sampling circuit and digital-to-analog converter. The digitized data may then be stored to a memory.

In another variation, the pulse generator / analyzer may perform a spectrum analysis using a frequency-sweep test signal. Some variations may include a voltage-controlled oscillator coupled to the network branch being tested through a directional coupler. In such variations, the test signal may be continuously generated with the oscillator, and be made to sweep a frequency range by varying the voltage to the oscillator. The directional coupler may separate the reflected signals from the forward sweep signal and feed the reflected signals to the sampling device.

In step 906, the switch in the smart gateway, which was toggled in step 901, may be controlled to reconnect the DUT to the local network.

After the received pulse / sweep signal is recorded in step 905, the recorded pulse data may be transmitted in step 907 through network 200 and/or network 100 to a server or other computing device. In step 908, the server or other computing device may further process the data to derive signatures for the tested cable branch and user devices connected to the tested cable branch. These signatures may be saved as a time sequence of reflected pulse measurements, and/or may include various derived factors including time delay, phase shift, amplitude attenuation, and frequency response. In an alternate configuration, pulse generator /analyzer 406/606 and/or control device 405/605 may compute the signatures and derived factors.

While in the example configuration illustrated in 7A and 7B, a single reflected pulse is received, in other configurations, a transmitted pulse may result in multiple reflected pulses generated by multiple user devices and impedance discontinuities along branches and at splitters. Additional signals may also be present with the reflected pulses. The signature may, for example, be affected by the state of user devices, which can be different based on the presence of other MoCA, Wi-Fi etc. devices/appliances, the power state of the user devices and other devices (e.g., on, off, standby), and whether other devices connected to the network are in use (e.g., motors, noise from appliances, etc.). In various examples, some or all of these signals may be picked up by the pulse generator /analyzer. The additional signals, in addition to the reflected pulses and the detected states of the devices (e.g., on/off), may be valuable in troubleshooting and optimizing the local network.

In various examples, steps 902 to 905 may be repeated several times with different user device configurations (e.g., on/off), with different use of other appliances, and with different pulse waveforms, to collect different data in order to characterize each user device and branch.

For example, in one variation, all user devices having a termination circuit 800 may be programmed to connect a broadband terminator matched to the impedance of the cable (e.g., 75 Ω terminator 802). In such a configuration, reflections received in response to transmitted pulses will result predominantly from impedance mismatches and imperfections in the tested transmission path (i.e., cable and/or the couplers/splitters). The round trip delay (e.g., time t3 in FIG. 7B) of each reflection may be proportional to the distance down the signal path the source of the reflection is located, and the shape and magnitude of the reflection will characterize the broadband impedance characteristics of the reflection source. For example, referring to FIG. 3, unterminated path 212 may cause a strong reflection to be reflected back to generator / analyzer 406/606. Together, the reflections caused by the transmission path may be treated as a signature of the path.

In another variation, all user devices except one user device on a tested transmission path may be commanded to connect a broadband terminator (e.g., 75 Ω terminator 802). The one user device not programmed to connect the broadband terminator, may instead connect a short or open circuit. The user devices with the terminators may reflect only a small amount of energy from the test pulse, while the user device with the short or open circuit may reflect almost all of the test pulse energy. In this way, each branch of cable may be isolated and characterized. Because the reflection energy is additive, using spectrum analysis techniques, a signature of different portions of the tested cable may be characterized and recorded. Such analysis may reveal the branch length and return loss due to each cable portion.

In another example test configuration, all user devices except one user device on a tested transmission path may be commanded to connect a broadband terminator (e.g., 75ohm terminator 802), and the user device not programmed to connect the broadband terminator, may instead connect the cable to the user device's receiver / transmitter interface. The reflected energy from a test pulse may than result from the path combined with the user device interface characteristics. The reflected test pulse may be recorded as a signature for that user device. Alternatively, if the signature of the branch connecting the user device has been characterized, a signature for the user device alone may be determined and recorded by subtracting the effects of the previously determined signature of the branch from the reflected pulse. This test may be repeated for each user device on the tested network branch.

In step 909, the signatures recorded in step 908 may be analyzed and matched to signatures of known devices, cables, cable anomalies, splitters, couplers, other known devices (e.g., RF devices), etc.

User devices, splitters, RF, and/or other devices, etc. may be characterized by their amplitude and phase return loss over a wide frequency range, which yields a unique signature for each device. In one example, an FFT (Fast Fourier Transform) of return reflections from a device may be used to calculate the front end filtering of that device. A library of device signatures stored in a memory may be searched to find matching devices known to have the same front end filtering characteristics. For example, a device with a MoCA protection filter may have a strong reflection in the MoCA frequency band of operation. MoCA compatible devices could then be ruled out as possible matches. As other examples, a known type of set-top box may have a strong reflection in the upstream-to-downstream transition band between 42 and 54 MHz, whereas a known type of DOCSIS 3.0 cable modem may have a strong reflection in the upstream-to-downstream transition band of 85 to 108 MHz. Based on the matching, specific devices or device types may be identified.

Similarly, features of the branches in the network can also be identified with unique signatures. For example, the difference in time from test pulse transmission to reception of the reflection (e.g., Delta t = .5*(t3-tl)), and the cable characteristics (e.g., impedance, wave velocity) may be used to determine the length of a branch of cable.

In various examples, many common devices and cable features may be tested and characterized so that they can be identified and cataloged in a library stored in the memory of a server, computing device, or the gateway itself.

Identifying devices and cable features by matching the devices and cable features to those cataloged in the library may be performed using various approaches. In one example, as previously discussed, multiple tests may be performed with each network branch put into different configurations using the termination circuit of FIG. 8. The reflections are a composite of all the devices, cables, splitters, etc. connected to the cable branch in each configuration. Using the additive properties of signal energy, contributions of each device, cable branch, splitter, etc. to the composite reflection may be isolated as a unique signature for the individual component. The isolated signature may then be compared to the signatures in the library to identify that particular component. The isolating and comparing may be performed autonomously by a server, computing device, or the smart gateway itself.

In another variation, which may be used individually or in combination with the approach above, the termination circuit of FIG. 8 may not be available in all or any of the user devices connected to a tested branch. In such a case, different combinations of signatures of different devices and cable features stored in the library may be constructed and compared to the composite reflected signal. The different combinations of signatures may be constructed and compared autonomously by a server, smart gateway, or other computing device, or the combination may be guided by a user. For example, if particular devices are known to be connected within the local network, than the signatures from the library for those known devices may be selected to be included within the combination of signatures. The server, smart gateway, or other computing device creating the combinations, may use the known device signatures as a starting point for determining remaining devices and cable features within the network.

In some examples, step 909 may further include transmitting a query message to user devices for information, which identifies the user devices. Such information may include a model number, serial number, version number, IP address, MAC address, operating parameters (e.g., transmitter / receiver frequencies), communication standard, etc. Such information may be used as a factor in the device matching and identification of step 909. The information may also be gathered after the matching and identification of step 909. For example, in step 909 a device may be determined to be a certain type of set-top box, and based on this determination, the server or other computing device may determine the correct query format for that type of set-top box. Any identification information obtained from the user devices may later be used during troubleshooting to match a signature or problem to a particular physical device. For example, if a model number and serial number are retrieved and matched to a signature, a technician may be able to physically locate the user device based on a label printed on the user device.

In some examples, steps 908 and 909 may include the creation of a network map or diagram illustrating the topography of the local network, the lengths of different branches, locations of splitters, locations of user devices, and identifying any names or types of user devices, which were determined to be connected to the network. The network map, combined with known locations of user device, may aid a technician in debugging network problems.

For example, a person may upgrade a DTA to a MoCA compatible set-top box, but after installation, discover that the set-top box is not communicating with other MoCA devices on the network. A network map in this situation may reveal whether there is a problem with signal strength, whether there is an un-terminated cable, or possibly, whether an old filter intended to protect the previous DTA from MoCA signals is still in the network. Such a filter, which may be hidden behind a wall or within an electrical box, may prevent the MoCA set-top box from working correctly. The network map may provide guidance as to the location of the hidden filter that may need to be removed, the location of the un-terminated cable that may need to be terminated, or a location where an amplifier may be inserted to improve signal strength. The network map may be provided by the server, smart gateway, or other computer device as an output on a display, remotely to another computer in the form of a webpage or other data file, or in the form of a printout hard copy. The network map may be a graphical depiction of the network, a tabular organization of data indicating devices, lengths, connection points, etc. and/or any other form to communicate the network information.

After the signatures of the user devices and various cable and splitter components are matched to actual devices or device types in step 909, the server or other computing device may in step 910 determine the best configuration for the smart gateway to support the connected user devices and correct issues in the local network.

In various examples, in addition to storing signatures, the library may further define operating parameters for each device in the library. In step 910, the server or other computing device may determine the configuration of switches in the smart gateway (e.g., gateways 301A and 301B) shown in FIGS. 5 and 6 to select filters and amplifiers based on the defined operating parameters from the library. For example if a device is identified as being vulnerable to MoCA interference then a filter may be switched in-line with the devices network branch to block the MoCA frequency bands of operation from reaching that device. If an end device is identified as being fed with excess attenuation due to splitter and cable loss, then an amplifier can be switched in-line to provide the desired upstream and downstream amplitude levels. In some examples, the required operating frequency bands and proper gains may be values stored in the library for each device. The configuration of switches in the smart gateway may also be determined by one or more algorithms executed by the server or other computing device. For example, if attenuation on a branch is measured to below a predetermined threshold, than an amplifier may be switched in-line with the branch.

Step 910 may not resolve all local network issues by configuring the smart gateway. For example, an un-terminated branch of a cable (e.g., FIG. 3, cable 212), may cause excessive reflections, which interfere with operation of devices on the same branch (e.g., FIG. 3, DTA 208). The interference caused by the un-terminated cable may not be corrected or compensated for by the smart gateway 301. In such a case, step 910 may further include, in various examples, generating a list or other indication of uncorrected problems, and may include directions or suggestions on how to manually improve the local network. Such direction may be shown in a list or on the network map discussed above with respect to steps 908 and 909. For example, a network map may be generated which illustrates the network topography and the configuration of the smart gateway, and indicates points on the topography that require further maintenance. For example, a notation on the map may indicate that the user should terminate cable 212 of FIG. 3.

In step 911, the server or other computing device may send the configuration information to the smart gateway via networks 100 and 200, and in step 912, the smart gateway via control device 405/605 configures its various switches to insert and remove filters and amplifiers according to the configuration information.

In an alternate embodiment, steps 907 and 911 may be skipped or rearranged so that step 908 and/or step 909 and/or step 910 may be performed by the smart gateway. For example, control device 405/605 may be configured with a combination of hardware and memory storing software that when executed by the hardware, performs the signal path and user device signature calculations, and based on these calculations, determines which types of user devices are connected to the network, and then determines the best configuration of the smart gateway switches to condition the signal paths in the local network 200 for supporting the connected user device. The smart gateway may further provide a user interface through an internal or external monitor, which provides further direction for troubleshooting the local network. In some variations, the instructions may be iterative and interactive, where the smart gateway directs the user to make a cable modification, and then the smart gateway performs the steps 901-912 over again to see if the anomalous condition is corrected.

The steps of process 900 may be performed in various orders, and certain steps may be omitted. For example, step 906 may be omitted, may be performed after steps 907, 908, 909, 910, or 911, or may be combined with step 912. Further, the process may be initiated periodically to detect changes in the local network 200, to respond to a user's service request, to detect unauthorized devices connected to the network, or to optimized network performance.

FIG. 10 is a block diagram of example equipment 1000 in which various disclosed user devices, smart gateways, servers, and other described embodiments may be implemented. For example, the control device 405 or 605 and pulse generator / analyzer 406 or 606 within the smart gateway may include various portions of equipment 1000 for controlling the gateway, analyzing characteristics of downstream paths, and communicating to upstream devices through networks 100 and 200.

In one example, a main processor 1001 is configured to execute instructions, and to control operation of other components of equipment 1000. Processor 1001 may be implemented with any of numerous types of devices, including but not limited to, one or more general-purpose microprocessors, one or more application specific integrated circuits, one or more field programmable gate arrays, and combinations thereof. In at least some embodiments, processor 1001 carries out operations described herein according to machine-readable instructions (e.g., software, firmware, etc.) stored in memory 1002 and 1003 and/or stored as hardwired logic gates within processor 1001. Processor 1001 may communicate with and control memory 1002 and 1003 and other components within 1000 over one or more buses.

Main processor 1001 may communicate with networks (e.g., networks 100 and 200) or other devices across one or more interfaces 1004 that may include a network connector 1005 (e.g., coaxial cable, optical, or wireless connector), a signal conditioning circuit 1009 (e.g., filter, circuit 800, etc.), a diplex filter 1006, a wideband tuner 1007, an upstream communication amplifier 1008, and/or a data protocol interface 1012 (e.g., MoCA). Main processor 1001 may also communicate with other devices through additional interfaces, such as a USB interface 1010, Ethernet interface 1015, wireless interfaces 1013 (e.g., Bluetooth, 802.11, etc.), etc. A power supply 1016 and/or battery backup 1017 may provide electrical power. User input to equipment 1000 may be provided over one of the aforementioned interfaces (e.g., 1004, 1010, 1013, 1015, etc.), or via a separate collection of buttons, infrared ports, or other controls in a console 1021. Equipment 1000 may include one or more output devices, such as a display 1023 (or an external television), and may include one or more output device controllers 1022, such as a video processor. Equipment 1000 may further include digital-to-analog and analog-to-digital circuitry 1011 for producing and sampling analog signals, such as those produced and sampled by pulse generator / analyzers 406 and 606 illustrated in FIGS. 4 and 6, respectively.

Memory 1002 and 1003 may include volatile and non-volatile memory and can include any of various types of tangible machine-readable storage medium, including one or more of the following types of storage devices: read only memory (ROM) modules, random access memory (RAM) modules, magnetic tape, magnetic discs (e.g., a fixed hard disk drive or a removable floppy disk), optical disk (e.g., a CD-ROM disc, a CD-RW disc, a DVD disc), flash memory, and EEPROM memory. As used herein (including the claims), a tangible machine-readable storage medium is a physical structure that can be touched by a human. A signal would not by itself constitute a tangible machine-readable storage medium, although other embodiments may include signals or other ephemeral versions of instructions executable by one or more processors to carry out one or more of the operations described herein.

In at least some embodiments, the various user devices, smart gateways, servers and other disclosed devices, which perform the various described processes, can be implemented as a single computing platform or multiple computing platforms, such as multiple equipment 1000, for redundancy and/or to increase the amount of analysis, data storage and other operations being performed simultaneously, or for convenience.

The foregoing description of embodiments has been presented for purposes of illustration and description. The foregoing description is not intended to be exhaustive or to limit embodiments to the precise form disclosed, and modifications and variations are possible in light of the above teachings or may be acquired from practice of various embodiments. The embodiments discussed herein were chosen and described in order to explain the principles and the nature of various embodiments and their practical application to enable one skilled in the art to utilize the present invention in various embodiments and with various modifications as are suited to the particular use contemplated. All embodiments need not necessarily achieve all objects or advantages identified above. All permutations of various features described herein are within the scope of the invention.

## Claims

1. A method comprising:
transmitting instructions through a first network to a network gateway,
wherein the network gateway couples together multiple network branches of a second network and couples the first network to the second network,
and the instructions command the network gateway to test characteristics of one or more of the network branches;
receiving test data through the first network from the network gateway,
wherein the test data includes results of the tested characteristics; and
analyzing the test data to identify one or more devices coupled to the tested one or more network branches based on the test data.

2. The method of claim 1, further comprising:
transmitting further instructions through the first network to the network gateway, wherein the further instructions command the gateway to switch signal conditioning circuits in-line with the one or more network branches based on the test data.

3. The method of claim 2, wherein the signal conditioning circuits include at least one of a filter and an amplifier.

4. The method of any preceding claim, further comprising:
based on the test data, generating diagnostic information identifying the structure of the second network.

5. The method of claim 4, wherein the diagnostic information includes at least one of information identifying the location of the one or more devices within the structure of the second network, information identifying the location of one or more impedance discontinuities within the structure of the second network, and information including instructions for correcting one or more anomalies within the second network.

6. The method of any preceding claim, wherein the analyzing identifies a location of a splitter connecting one or more sub-branches to one of the network branches of the second network.

7. The method of any preceding claim, wherein the analyzing comprises:
determining frequency components of the test data;
identifying one or more frequency signatures within the frequency components; and
matching the one or more identified frequency signatures to frequency signatures stored in a memory, wherein the frequency signatures stored in the memory correspond to the one or more identified devices.

8. The method of claim of any preceding claim, wherein the tested characteristics include radio frequency characteristics of the one or more network branches.

9. An apparatus comprising:
a processor and memory storing machine-readable instructions that when executed by the processor, cause the apparatus to:
transmit instructions through a first network to a network gateway,
wherein the network gateway couples together multiple network branches of a second network and couples the first network to a second network, and
the instructions command the network gateway to test characteristics of one or more of the network branches;
receive test data through the first network from the network gateway,
wherein the test data includes results of the tested characteristics; and
analyze the test data to identify one or more features of the second network.

10. The apparatus of claim 9, wherein the machine-readable instructions, when executed by the processor, further causes the apparatus to:
transmit further instructions through the first network to the network gateway, wherein the further instructions command the gateway to switch signal conditioning circuits in-line with the one or more network branches based on the test data.

11. The apparatus of claim 10, wherein the signal conditioning circuits include at least one of a filter and an amplifier.

12. The apparatus of claims 9-11, wherein the machine-readable instructions, when executed by the processor, further causes the apparatus to:
based on the test data, generate diagnostic information identifying the structure of the second network, wherein the diagnostic information includes at least one of information identifying the location of the one or
more devices within the structure of the second network, information identifying the location of one or more impedance discontinuities within the structure of the second network, and information including instructions for correcting one or more anomalies within the second network.

13. The apparatus of claims 9-12, wherein the one or more identified features of the second network include the location of a splitter connecting one or more sub-branches to one of the network branches of the second network.

14. The apparatus of claims 9-13, wherein the analyzing of the test data comprises:
determining frequency components of the test data;
identifying one or more frequency signatures within the frequency components; and
matching the one or more identified frequency signatures to frequency signatures stored in a memory, wherein the frequency signatures stored in the memory correspond to the one or more identified devices.

15. The apparatus of claims 9-14, wherein the tested characteristics include radio frequency characteristics of the one or more network branches.
